(19) Europäisches Patentamt
European Patent Office
Office européen des brevets

(11) Veröffentlichungsnummer: **0 287 955 B1**

(12) **EUROPÄISCHE PATENTSCHRIFT**

(45) Veröffentlichungstag der Patentschrift: **15.01.92**

(51) Int. Cl.5: **C08K 9/08**, C08K 3/02, //C08L77/00,C08L67/00

(21) Anmeldenummer: **88105966.1**

(22) Anmeldetag: **14.04.88**

(54) **Verfahren zur Herstellung von brandgeschützten, roten Phosphor enthaltenden thermoplastischen Formmassen auf der Basis von Polyestern oder Polyamiden.**

(30) Priorität: **24.04.87 DE 3713746**

(43) Veröffentlichungstag der Anmeldung:
**26.10.88 Patentblatt 88/43**

(45) Bekanntmachung des Hinweises auf die Patenterteilung:
**15.01.92 Patentblatt 92/03**

(84) Benannte Vertragsstaaten:
**BE DE FR GB NL**

(56) Entgegenhaltungen:
**EP-A- 0 093 903**
**EP-A- 0 125 483**
**FR-A- 2 262 098**
**GB-A- 1 458 194**
**US-H- 103 701**

(73) Patentinhaber: **BASF Aktiengesellschaft**
**Carl-Bosch-Strasse 38**
**W-6700 Ludwigshafen(DE)**

(72) Erfinder: **Plachetta, Christoph, Dr.**
**Albert-Einstein-Allee 12**
**W-6703 Limburgerhof(DE)**
Erfinder: **McKee, Graham Edmund, Dr.**
**Kastanienweg 8**
**W-6940 Weinheim(DE)**
Erfinder: **Weiss, Hans-Peter, Dr.**
**Pfalzring 75**
**W-6704 Mutterstadt(DE)**

EP 0 287 955 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von brandgeschützten thermoplastischen Formmassen, die roten Phosphor als Flammschutzmittel enthalten.

Die Verwendung von rotem Phosphor als Flammschutzmittel in Polyamiden und Polyestern ist seit langem bekannt. Die Einarbeitung von rotem Phosphor in Pulverform in die Polymerschmelze hat jedoch einige schwerwiegende Nachteile.

Da dabei der Phosphor mit sehr heißen Oberflächen in Kontakt kommt, besteht die Gefahr von Phosphorbränden und Phosphorstaubexplosionen. Darüber hinaus sind Phosphorstäube als gesundheitsschädlich einzustufen.

Zur Verbesserung der Einarbeitung, insbesondere zur Verringerung des Staubens wurde vorgeschlagen, den roten Phosphor mit einem Polymeren zu beschichten und zu umhüllen. Hierfür werden in der GB-A-1 458 194 Styrol/Butadien-Copolymere und in der DE-A-26 25 691 Polymere mit einem Erweichungspunkt oberhalb von 90 °C vorgeschlagen. Auch in der DE-A-32 15 750 wird ein Verfahren zur Brandschutzausrüstung von Polyamiden und Polyurethanen beschrieben, gemäß welchem der rote Phosphor in einem niedermolekularen Polyamid als Trägermaterial eingesetzt wird.

Alle diese Maßnahmen bringen zwar eine Verbesserung des Staubproblems mit sich, doch konnte die Gefahr von Phosphorbränden und Phosphorstaubexplosionen dadurch nicht in ausreichendem Maße beseitigt werden.

Aus der EP-A 125 483 sind Polyamide mit Schlagzähmodifizierungsmitteln bekannt, welche durch Emulsionspolymerisation hergestellt werden und roten Phosphor enthalten können.

Aufgabe der vorliegenden Erfindung war es daher, die geschilderten Nachteile zu beheben und ein einfaches, jedoch den sicherheitstechnischen Problemen genügendes Verfahren zur Einarbeitung des Phosphors zugänglich zu machen.

Demgemäß wurde ein Verfahren zur Herstellung von brandgeschützten, thermoplastischen Formmassen gefunden, die roten Phosphor als Flammschutzmittel enthalten, welches dadurch gekennzeichnet ist, daß in eine Schmelze eines Polyamids oder eines Polyesters oder deren Mischungen eine wäßrige Elastomerzusammensetzung eingemischt wird, die als wesentliche Komponenten

$b_1$) 5 bis 75 Gew.% eines durch Emulsionspolymerisation hergestellten Elastomeren,
$b_2$) 10 bis 70 Gew.% roten Phosphor,
$b_3$) 10 bis 80 Gew.% Wasser und
$b_4$) 0,1 bis 5 Gew.% eines Dispergierhilfsmittels enthält,

wobei die Anteile an Polyamid oder Polyester oder deren Mischungen und Elastomerzusammensetzung jeweils im Bereich von 5 bis 95 Gew.%, bezogen auf das Gesamtgewicht der Formmasse liegen, und der Anteil des roten Phosphors 3 bis 20 Gew.%, bezogen auf das Gesamtgewicht der Formmasse ausmacht.

Die als Komponente A) eingesetzten Polyamide sind an sich bekannt. Teilkristalline oder amorphe Polyamide mit einem Molekulargewicht (Gewichtsmittelwert) von mindestens 5000, wie sie z.B. in den DE-OS 20 71 250, 20 71 251, 21 30 523, 21 30 948, 22 41 322, 23 12 966, 25 12 606 und 33 93 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylauryllactam sowie Polyamide die durch Umsetzung von Dicarbonsäuren mit Diaminen erhalten werden. Als Dicarbonsäuren sind Alkandicarbonsäuren mit 4 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- sowie Isophthalsäure genannt.

Als Diamine eignen sich besonders Alkandiamine mit 4 bis 14, insbesondere 4 bis 10 Kohlenstoffatomen sowie m-Xylylendiamin, Di-(4-aminophenyl)-methan, Di-(4-aminocyclohexyl)-methan, 2,2-Di-(4-aminophenyl)-propan oder 2,2-Di-(4-aminocyclohexyl)-propan.Weiterhin sind Polyamide, die durch Copolymerisation zweier oder mehrerer der vorgenannten Monomeren erhältlich sind, oder Mischungen mehrerer Polyamide geeignet.

Verfahren zur Herstellung solcher Polyamide wie auch derartige Polyamide selbst sind an sich bekannt und in der Literatur beschrieben, so daß sich hier nähere Angaben erübrigen.

Die relative Viskosität der Polyamide liegt im allgemeinen im Bereich von 2,2 bis 4,5, gemessen in 96 gew.%iger Schwefelsäure (1 g/100 ml) bei 25 °C.

Auch die als Komponente A) einsetzbaren Polyester sind an sich bekannt und in der Literatur beschrieben. Vorzugsweise werden Polyester verwendet, die einen aromatischen Ring in der Hauptkette enthalten. Dieser kann auch substituiert sein, z.B. durch Halogene wie Chlor und Brom und durch $C_1$-$C_4$-Alkylgruppen, z.B. Methyl-, Ethyl-, i- bzw. n-Propyl und i- bzw. n- bzw. t-Butylgruppen.

Die Herstellung der Polyester kann durch Umsetzung von Dicarbonsäuren, deren Estern oder anderer

esterbildender Derivate mit Dihydroxiverbindungen in an sich bekannter Weise erfolgen.

Als Dicarbonsäuren kommen beispielsweise aliphatische und aromatische Dicarbonsäuren in Frage, die auch in Mischung eingesetzt werden können. Nur beispielsweise seien hier Naphthalindicarbonsäuren, Terephthalsäure, Isophthalsäure, Adipinsäure, Azelainsäure, Sebacinsäure, Dodecandisäure und Cyclohexandicarbonsäuren sowie Mischungen dieser Carbonsäuren und deren esterbildenden Derivaten genannt.

Als Dihydroxyverbindungen werden vorzugsweise Diole mit 2 bis 6 C-Atomen, besonders bevorzugt Ethylenglykol, 1,4-Butandiol, 1,4-Butendiol und 1,6-Hexandiol verwendet; es können jedoch auch 1,4-Hexandiol, 1,4-Cyclohexandiol, 1,4-Di-(hydroxymethyl)cyclohexan, Bisphenol A, Neopentylglykol, Mischungen dieser Diole sowie esterbildende Derivate derselben eingesetzt werden.

Polyester aus Terephthalsäure und einer $C_2$-$C_6$-Diolkomponente wie Polyethylenterephthalat und Polybutylenterephthalat werden besonders bevorzugt.

Die relative Viskosität $\eta$spez/c derartiger Polyester, gemessen an einer 0,5 gew.%igen Lösung in einem Phenol/ortho-Dichlorbenzol-Gemisch (Gewichtsverhältnis 3:2) bei 25 °C liegt im allgemeinen im Bereich von 1,2 bis 1,8 dl/g.

Unter Polyestern sollen hierin auch Polycarbonate verstanden werden, die durch Polymerisation von aromatischen Dihydroxyverbindungen mit Kohlensäure oder deren Derivaten erhältlich sind. Derartige Produkte sind an sich bekannt und in der Literatur beschrieben.

Als Polyester seien auch die sogenannten flüssig-kristallinen Polyester genannt, die eine ausgeprägte Anisotropie bestimmter Eigenschaften zeigen. Insbesondere seien hier die thermotropen vollaromatischen Polyester genannt, wie sie dem Fachmann aus einer Vielzahl von Patentanmeldungen bekannt sind. Diese bilden eine anisotrope Schmelzphase.

Als Komponente A) können grundsätzlich Polyamide oder Polyester allein oder auch deren beliebige Mischungen eingesetzt werden. Der Anteil der Komponente A) an den erfindungsgemäßen Formmassen beträgt 5 bis 95, vorzugsweise 20 bis 80 und insbesondere 30 bis 75 Gew.%, bezogen auf das Gesamtgewicht der Formmasse.

Die wäßrigen Elastomerzusammensetzungen B) enthalten als wesentliche Bestandteile die in Anspruch 1 aufgeführten Komponenten $b_1$) bis $b_4$).

Bei der Komponente $b_1$) handelt es sich um ein durch Emulsionspolymerisation hergestelltes Elastomer, welches 5 bis 75. vorzugsweise 15 bis 65 und insbesondere 20 bis 60 Gew.% der Elastomerzusammensetzung ausmacht.

Die Elastomeren können durch Emulsionspolymerisation in an sich bekannter Weise, wie sie z.B. in Houben-Weyl, Methoden der organischen Chemie, Band XII. I (1961) sowie bei Blackley in der Monographie "Emulsion Polymerization" beschrieben wird, hergestellt werden. Die verwendbaren Emulgatoren und Katalysatoren sind an sich bekannt.

Grundsätzlich Können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von diese Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0 °C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20 °C) am Aufbau des Elastomeren beteiligt, so werden diese im allgemeinen durch Polymerisation von Styrol, Acrylnitril, Methacrylnitril, $\alpha$-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel

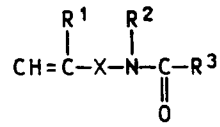

eingeführt werden können, wobei die Substituenten folgende Bedeutung haben können:

$R^1$ Wasserstoff oder eine $C_1$-$C_4$-Alkylgruppe,

$R^2$ Wasserstoff, eine $C_1$-$C_8$-Alkylgruppe oder eine Arylgruppe, insbesondere Phenyl,

$R^3$ Wasserstoff, eine $C_1$-$C_{10}$-Alkyl-, eine $C_6$-$C_{12}$-Alkylgruppe oder $-OR^4$,

$R^4$ eine $C_1$-$C_8$-Alkyl- oder $C_6$-$C_{12}$-Alkylgruppe, die gegebenenfalls mit O- oder H-haltigen Gruppen substituiert sein können,

X eine chemische Bindung, eine $C_1$-$C_{10}$-Alkylen- oder $C_6$-$C_{12}$-Alkylgruppe oder

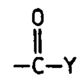

Y O-Z- oder NH-Z und

Z eine $C_1$-$C_{10}$-Alkylen- oder $C_6$-$C_{12}$-Arylengruppe.

Auch die in der EP-A 208 187 beschriebenen Pfropfmonomeren sind zur Einführung reaktiver Gruppen an der Oberfläche geeignet.

Beispiele für Monomere, mit denen die erwähnten funktionellen Gruppen eingeführt werden können sind Methacrylsäureglycidylester, Acrylsäureglycidylester, Allylglycidylether, Vinylglycidylether, Itaconsäureglycidylester, Acrylsäure, Methacrylsäure und ihre Metall-, insbesondere Alkalimetall- und Ammoniumsalze, Maleinsäure, Fumarsäure, Itaconsäure, Vinylbenzoesäure, Vinylphthalsäure, Monoester dieser Säuren mit Alkoholen ROH, wobei R bis zu 29 Kohlenstoffatome aufweist und z.B. eine Methyl-, Ethyl-, Propyl-, Isopropyl-, n-Butyl-, i-Butyl-, Hexyl-, Cyclohexyl-, Octyl-, 2-Ethylhexyl-, Decyl-, Stearyl-, Methoxyethyl-, Ethoxyethyl- oder Hydroxyethylgruppe darstellt. Maleinsäureanhydrid und Metallsalze (insbesondere Alkalimetall und Erdalkalimetallsalze) von polymerisierbaren Carbonsäuren sowie Ester von Acrylsäure oder Methacrylsäure mit tertiären Alkoholen, z.B. tert.-Butylacrylat weisen zwar keine freien Carboxylgruppen auf, kommen in ihrem Verhalten aber den freien Säuren nahe und werden deshalb als Monomere mit latenten Carboxylgruppen bezeichnet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)ethylacrylat, (N,N-Dimethylamino)-methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1 ,3-dien, Divinylbenzol, Diallylphthalat und Dihydrodicyclopentodienylacrylat sowie die in der EP-A 50 265 beschriebenen Verbindungen.

Ferner können auch sogenannten pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfnetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an der Komponente A) bis zu 5 Gew.%, vorzugsweise nicht mehr als 3 Gew.%, bezogen auf A).

Nachfolgende seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| A | Buta-1,3-dien, Isopren, n-Butylacrylat, Ethylhexylacrylat oder deren Mischungen | Styrol, Acrylnitril, Methylmethacrylat |
| B | wie A aber unter Mitverwendung von Vernetzern | wie A |
| C | wie A oder B | n-Butylacrylat, Ethylacrylat, Methylacrylat, Buta-1,3-dien, Isopren, Ethylhexylacrylat |
| D | wie A oder B | wie A oder C aber unter Mitverwendung von Monomeren mit reaktiven Gruppen wie hierin beschrieben |
| E | Styrol, Acrylnitril, Methylmethacrylat oder deren Mischungen | erste Hülle aus Monomeren wie unter A und B für den Kern beschrieben<br>zweite Hülle wie unter A oder C für die Hülle beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat oder n-Butylacrylat/ Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Der Anteil des roten Phosphors ($b_2$) an der wäßrigen Elastomerzusammensetzung beträgt 10 bis 70, vorzugsweise 20 bis 70 und insbesondere 25 bis 65 Gew.%, bezogen auf das Gesamtgewicht der wäßrigen Elastomerzusammensetzung.

Der rote Phosphor kann direkt, wie er kommerziell erhältlich ist, eingesetzt werden. Es sind jedoch auch Produkte im Handel, in denen der rote Phosphor oberflächlich mit niedermolekularen flüssigen Substanzen wie Silikonöl, Paraffinöl oder Estern der Phthalsäure, der Adipinsäure oder Polymeren oder Oligomeren beschichtet ist. Alle diese Produkte sind erfindungsgemäß verwendbar.

Die mittlere Teilchengröße $d_{50}$ (Zahlenmittelwert) der in den Elastomerzusammensetzungen verteilten Phosphorpartikel liegt bevorzugt im Bereich von 0,0001 bis 0,5, insbesondere von 0,001 bis 0,2 mm.

Als Komponente $b_3$ enthalten die Elastomerzusammensetzungen 10 bis 80, vorzugsweise 12 bis 70 und besonders bevorzugt 15 bis 55 Gew.% Wasser. Dieses rührt zum Teil oder vollständig von der Herstellung der Elastomeren $b_1$ durch Emulsionspolymerisation her.

Die als Dispergierhilfsmittel in den wäßrigen Elastomerzusammensetzungen B enthaltenen Substanzen sind an sich und in der Literatur beschrieben. Hier seien nur Alkalimetall- und Ammoniumsalze von Alkyl-, Aryl-, Alkaryl- und Aralkylsulfonaten, Sulfate, Polyethersulfate, Fettsäuren und oxi-substituierte Fettsäuren oder deren Ester, Alkohole, Amine und Amide, Alkylphenole und Organophosphorsäuren bzw. deren Alkalimetall- oder Ammoniumsalze genannt, wie sie z.B. in der EP-A-82 020 aufgeführt sind.

Die Herstellung der wäßrigen Elastomerzusammensetzungen kann einfach dadurch erfolgen, daß man in

die bei der Emulsionspolymerisation anfallende Dispersion in einer Mischvorrichtung z.B. einem Rührkessel oder anderen für diesen Zweck bekannten Vorrichtungen den roten Phosphor einmischt. Dies wird in der Regel bei Temperaturen im Bereich von 10 bis 70 °C, vorzugsweise bei Raumtemperatur, über einen Zeitraum von 1 Minute bis 5 Stunden, vorzugsweise mindestens etwa 10 Minuten durchgeführt. Die Dispergierhilfsmittel (Emulgatoren) werden in der Regel bereits vor der Emulsionspolymerisation zugegeben, können jedoch auch teilweise vor der Zugabe des roten Phosphors zugesetzt werden.

Falls die bei der Emulsionspolymerisation anfallende Elastomerdispersion einen zu hohen oder zu niedrigen Wassergehalt aufweist, kann dieser entsprechend durch Abziehen oder Zugabe von Wasser auf den gewünschten Wert eingestellt werden.

Die auf diese Weise hergestellten wäßrigen Elastomerzusammensetzungen in Form von Suspensionen oder Dispersionen sind fließfähig und pumpbar. Die Phosphorteilchen setzen sich dabei größtenteils nicht ab, wie dies z.B. bei der Phosphoreinmischung in Wasser zu beobachten ist.

Neben den Komponenten A) und B) können noch bis zu 60, vorzugsweise 5 bis 50 Gew.%, insbesondere 10 bis 40 Gew.%, faser- oder teilchenförmige Füllstoffe oder Mischungen zugesetzt werden. Bevorzugt werden faserförmige Füllstoffe, wie Glasfasern, Kohlenstoff-Fasern oder auch faserförmige Silikate, wie Wollastonit. Auch Glaskugeln können vorteilhaft eingesetzt werden.

Bei der Verwendung von Glasfasern können diese zur besseren verträglichkeit mit dem Polyamid oder dem Polyester mit einer Schlichte und einem Haftvermittler ausgerüstet sein. Im allgemeinen haben die verwendeten Glasfasern einen Durchmesser im Bereich von 6 bis 20 µm. Die Einarbeitung dieser Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Wie bereits erwähnt, kann der Anteil der Füllstoffe bis zu 60 Gew.%, vorzugsweise bis zu 50 Gew.% und insbesondere 10 bis 40 Gew.%, bezogen auf das Gesamtgewicht der Formmasse betragen.

Neben den wesentlichen Komponenten A) bis C) können übliche Zusatzstoffe und Verarbeitungshilfsmittel zugesetzt werden. Deren Anteil beträgt im allgemeinen bis zu 60, vorzugsweise bis zu 50 Gew.%, bezogen auf das Gesamtgewicht der Komponenten A) bis C).

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Färbemittel wie Farbstoffe und Pigmente, und Weichmacher.

Oxidationsverzögerer und Wärmestabilisatoren sind z.B. Halogenide von Metallen der Gruppe I des periodischen Systems, z.B. Natrium-, Kalium- und Lithiumhalogenide, ggf. in Verbindung mit Kupfer-(I)-Halogeniden, z.B. Chloriden, Bromiden oder Iodiden. Ferner sind sterisch gehinderte Phenole, Hydrochinone, substituierte Vertreter dieser Gruppe und Mischungen der selben, vorzugsweise in Konzentrationen bis zu 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.% eingesetzt werden.

Gleit- und Entformungsmittel, die in der Regel in Mengen bis zu 2 Gew.% der thermoplastischen Masse zugesetzt werden, sind Stearinsäure, Stearylalkohol, Stearinsäurealkylester und -amide sowie Ester des Pentaerythrits mit langkettigen Fettsäuren.

Unter den Zusatzstoffen sind auch Stabilisatoren zu erwähnen, die die Zersetzung des roten Phosphors in Gegenwart von Feuchtigkeit und Luftsauerstoff im fertigen Produkt verhindern. Als Beispiele hierfür seien Zinkoxid und Cadmiumoxid genannt.

Gemäß dem erfindungsgemäßen Verfahren zur Herstellung von brandgeschützten thermoplastischen Formmassen, die roten Phosphor enthalten. wird eine wäßrige Elastomerzusammensetzung B der in Anspruch 1 genannten Zusammensetzung in eine Schmelze des Polyesters oder Polyamids oder deren Mischungen (Komponente A) eingemischt, wobei der Anteil des roten Phosphors im Bereich von 3 bis 20 Gew.%, bezogen auf das Gesamtgewicht der Formmasse, liegt und die relativen Mengen der Komponente A) und der Komponente B) jeweils 5 bis 95 Gew.% betragen.

Es versteht sich, daß der Phosphorgehalt von 3 bis 20 Gew.% durch entsprechende Bemessung der Komponenten A) und B) , sowie durch die Zusammensetzung der Elastomerzusammensetzung B) selbst, beeinflußt wird, und dadurch auch festgelegt werden kann.

Vorzugsweise beträgt der Anteil des roten Phosphors 4 bis 16 Gew.%, bezogen auf das Gesamtgewicht der thermoplastischen Formmassen.

Es ist auch möglich, ein Konzentrat (Batch) der Elastomerzusammensetzung in einer geringen Menge eines Polyamids herzustellen, die Elastomerzusammensetzung in die Schmelze des Polyamids oder des Polyesters oder deren Mischungen einzumischen, diese Mischung auf einem Extruder gut durchzumischen und zu extrudieren und anschließend in einem zweiten Arbeitsgang das bei der ersten Extrusion erhaltene

Produkt mit weiterem Thermoplasten, d.h. Polyester oder Polyamid erneut auf einem Extruder abzumischen.

Das in der wäßrigen Elastomerzusammensetzung erhaltene Wasser wird vorzugsweise bei der Extrusion auf dem Extruder über entsprechende Einrichtungen, die an sich bekannt sind, entfernt.

Die Zugabe der gegebenenfalls vorhandenen Füllstoffe C erfolgt vorzugsweise bei der endgültigen Abmischung der Komponenten auf dem Extruder, es ist jedoch prinzipiell auch möglich. die Füllstoffe teilweise oder vollständig bei der Herstellung des vorstehend beschriebenen Konzentrats aus Polyamid oder Polyester und Elastomerzusammensetzung, zuzugeben.

Es sei jedoch betont, daß die Herstellung eines solchen Konzentrats bzw. Batches nicht notwendigerweise erforderlich ist; in vielen Fällen hat es sich sogar als vorteilhaft herausgestellt, alle Komponenten direkt in einem Arbeitsgang auf einem Extruder oder einer entsprechenden Mischvorrichtung abzumischen, da dadurch die thermische Belastung des Thermoplasten verringert wird (da nur ein einmaliges Aufschmelzen erforderlich ist).

Als Mischvorrichtungen eignen sich Schneckenextruder, Brabender-Mühlen oder Banbury-Mühlen. auf denen die Komponenten bei Temperaturen üblicherweise im Bereich von 220 bis 300 °C gemischt werden. Die Mischtemperaturen hängen verständlicherweise von der Art des verwendeten Thermoplasten, d.h. des Polyesters oder des Polyamids ab.

Das erfindungsgemäße Verfahren zeichnet sich dadurch aus, daß die Herstellung als solche sicherheitstechnisch und gesundheitlich wesentlich unbedenklicher ist als die Einmischung von rotem Phosphor auf herkömmliche Art und Weise.

Die nach dem erfindungsgemäßen Verfahren herstellbaren Formmassen lassen sich z.B. durch Spritzguß zu Formkörpern verarbeiten, die bei sehr niedrigen Kautschukgehalten gute mechanische Eigenschaften, insbesondere eine gute Schlagzähigkeit, aufweisen.

Diese Formmassen eignen sich insbesondere für Anwendungen z.B. auf dem Elektrosektor, dem Bausektor und dem Kraftfahrzeugsektor und zur Herstellung von Filmen, Fasern und Folien.

Beispiele

Herstellung der wäßrigen Elastomerzusammensetzung

Eine Dispersion eines Kern-Schalen-Polymerisats mit einem Kern aus n-Butylacrylat und Dihydrodicyclopentadienylacrylat (Gewichtsverhältnis 98:2) und einer Hülle aus n-Butylacrylat und Methacrylsäure (Gewichtsverhältnis 98,5:1,5) und einem Kern-Schalen-Gewichtsverhältnis von 60:40, welche durch Emulsionspolymerisation in an sich bekannter Weise hergestellt worden war, wurde in einem Rührkessel bei Raumtemperatur mit rotem Phosphor und dem Natriumsalz einer $C_{12}$-$C_{18}$-Alkansulfonsäure versetzt. Die Einmischzeit betrug 30 min.

Zusammensetzung der Elastomerdispersion:

52,3 Gew.% Elastomer
47,2 Gew.% Wasser
0.5 Gew.% Natriumsalz einer $C_{12}$-$C_{18}$-Alkansulfonsäure
47,2 g dieser Dispersion wurden mit 0,9 g des o.g. Emulgators und 51,9 g rotem Phosphor versetzt.

Es wurde eine stabile, fließfähige und pumpbare Dispersion folgender Zusammensetzung erhalten:

24,7 Gew.% Elastomer ($b_1$)
51,9 Gew.% Prot ($b_2$)
22,2 Gew.% Wasser ($b_3$)
1,2 Gew.% Emulgator ($b_4$)

Herstellung der Formmassen (Beispiele 1 bis 3)

Es wurden folgende Komponenten eingesetzt:

Komponente A:

Polyhexamethylenadipinamid (Polyamid-6,6) mit einer relativen Viskosität von 2,6, gemessen in 96 %iger Schwefelsäure (1 g/100 ml) bei 25 °C (Ultramid® A3 der BASF AG)

Komponente B:

Elastomerzusammensetzung wie vorstehend beschrieben.

Komponente C:

Glasfasern
64,5 Kg des Polyamids A) wurden auf einem Extruder bei 280° C aufgeschmolzen und in diese Schmelze 13,6 Kg der Elastomerdispersion B) und 25 Kg Glasfasern eingemischt (Beispiel 1). In den Beispielen 2 und 3 wurde die Menge des Polyamids auf 63,8 kg reduziert und zusätzlich 0,7 Kg Cadmiumoxid bzw. Zinkoxid als Phosphorstabilisator zugegeben.

In den Vergleichsbeispielen 4 und 5 wurde der rote Phosphor in Pulverform in die Formmassen eingearbeitet, wobei in Beispiel 5 zusätzlich noch ein Kautschuk, dessen Zusammensetzung dem Elastomeren $b_1$ der Elastomerzusammensetzung entsprach, zugegeben wurde.

Nach Abmischen auf dem Extruder wurden die Formmassen extrudiert, granuliert und im Spritzguß zu Prüfkörpern verarbeitet.

Das im Verlauf der Abmischung bei den Formmassen freiwerdende Wasser wurde über eine Vorrichtung am Extruder abgezogen.

Die Ergebnisse der Schlagzähigkeitsmessungen nach DIN 53 453. der Schädigungsarbeit nach DIN 53 443, des Elastizitätsmoduls nach DIN 53 457 und der Reißfestigkeit nach DIN 53 455 sind ebenso wie die Ergebnisse der Flammprüfung nach UL 94 in der Tabelle 1 wiedergegeben.

Die Bestimmung des löslichen Phosphors wurde nach 30 tägiger Lagerung von Normkleinstäben in Wasser bei 80° C durchgeführt

Tabelle 1

| Beispiel Nr. | 1 | 2 | 3 | 4V* | 5V* |
|---|---|---|---|---|---|
| Komponente A (Gew.%) | 64,5 | 63,8 | 63,8 | 68,0 | 53,3 |
| $b_1$ (Gew.%) | 3,36 | 3,36 | 3,36 | - | 14,0 |
| $b_2$ (Gew.%) | 7,0 | 7,0 | 7,0 | 7,0 | 7,0 |
| $b_4$ (Gew.%) | 0,14 | 0,14 | 0,14 | - | - |
| C (Gew.%) | 25,0 | 25,0 | 25,0 | 25,0 | 25,0 |
| Weitere Zusätze (Gew.%) | - | 0,7 CdO | 0,7 ZnO | - | 0,7 CdO |
| Schlagzähigkeit $a_n$ kJ/m² bei 23°C | 53 | 50 | 55 | 35 | 50 |
| Schädigungsarbeit $W_{50}$ Nm (23°C) | 10 | 11 | 11 | - | 11 |
| Elastizitätsmodul N/mm² | 7200 | 7000 | 7100 | 9000 | 5800 |
| Reißfestigkeit N/mm² | 116 | 110 | 116 | 160 | 93 |
| Bewertung nach UL 94 (3 mm Flachstäbe) | V-0 | V-0 | V-0 | V-0 | V-0 |
| ppm P nach 30 d | 190 | 60 | 80 | 105 | 40 |

* Vergleichsbeispiele

Die Ergebnisse in Tabelle 1 zeigen, daß nach dem erfindungsgemäßen Verfahren herstellbare Formmassen bei wesentlich niedrigeren Kautschukgehalten als beim Vergleichsbeispiel 5 eine gute Schlagzähigkeit aufweisen und, bedingt durch den niedrigeren Kautschukgehalt, der Elastizitätsmodul und die Reißfestigkeit deutlich besser sind als bei herkömmlichen schlagzäh modifizierten Polyamiden mit höherem Kautschukgehalt.

## Patentansprüche

1. Verfahren zur Herstellung von brandgeschützten thermoplatischen Formmassen, die roten Phosphor als Flammschutzmittel enthalten, dadurch gekennzeichnet, daß man in eine Schmelze eines Polyamids oder eines Polyesters oder deren Mischungen eine wäßrige Elastomerzusammensetzung einmischt, die als wesentliche Komponenten

   $b_1$) 5 bis 75 Gew.% eines durch Emulsionspolymerisation hergestellten Elastomeren,
   $b_2$) 10 bis 70 Gew.% roten Phosphor,
   $b_3$) 10 bis 80 Gew.% Wasser und
   $b_4$) 0,1 bis 5 Gew.% eines Dispergierhilfsmittels enthält,

   wobei die Anteile an Polyamid oder Polyester oder deren Mischungen und Elastomerzusammensetzung jeweils im Bereich von 5 bis 95 Gew.%, bezogen auf das Gesamtgewicht der Formmasse liegen, und der Anteil des roten Phosphors 3 bis 20 Gew.%, bezogen auf das Gesamtgewicht der Formmasse ausmacht.

## Claims

1. A process for the preparation of a fireproofed thermoplastic molding material which contains red phosphorus as a flameproofing agent, wherein an aqueous elastomer composition which contains, as essential components,
   $b_1$) from 5 to 75% by weight of an elastomer prepared by emulsion polymerization,
   $b_2$) from 10 to 70% by weight of red phosphorus,
   $b_3$) from 10 to 80% by weight of water and
   $b_4$) from 0.1 to 5% by weight of a dispersant,
   is mixed into a melt of a polyamide or of a polyester or of a mixture of these,
   the amounts of polyamide or polyester, or of a mixture of these, and elastomer composition each being from 5 to 95% by weight, based on the total weight of the molding material, and the amount of the red phosphorus being from 3 to 20% by weight, based on the total weight of the molding material.

## Revendications

1. Procédé de préparation de masses à mouler thermoplastiques ignifugées qui contiennent du phosphore rouge en tant qu'agent retardant les flammes, caractérisé en ce qu'on incorpore, dans une masse fondue d'un polyamide, d'un polyester ou de leurs mélanges, une composition aqueuse d'élastomère qui contient, comme constituants essentiels,
   $b_1$) de 5 à 75% en poids d'un élastomère préparé par polymérisation en émulsion,
   $b_2$) de 10 à 70% en poids de phosphore rouge,
   $b_3$) de 10 à 80% en poids d'eau et
   $b_4$) de 0,1 à 5% en poids d'un agent dispersant,
   les proportions de polyamide, de polyester ou de leurs mélanges et de composition d'élastomère se situant respectivement dans la gamme de 5 à 95% en poids par rapport au poids total de la masse à mouler et la part du phosphore rouge representant 3 à 20% en poids par rapport au poids total de la masse à mouler.